# EUROPÄISCHE PATENTANMELDUNG

(11) **EP 0 839 758 A1**
(43) Veröffentlichungstag der Anmeldung: **06.05.1998**
(21) Anmeldenummer: 97810675.5
(22) Anmeldetag: 17.09.1997
(51) Int. Cl.: B67D 5/02, B65D 88/60

(54) **Transport- und Austragbehälter für hochviskose und pastöse Produkte**

(30) Priorität: 29.10.1996 DE 19644980
(71) Anmelder: Stöcklin Logistik AG, 4143 Dornach 1 (CH)
(72) Erfinder: Kost, Heinz, 4312 Magden (CH)
(74) Vertreter: Ullrich, Gerhard, Dr.

(57) **Zusammenfassung**

Ein Transport- und Austragbehälter für hochviskose und pastöse Produkte weist eine zylinderförmige Behälterwand (1), einen konischen Behälterboden (2) und einen abnehmbaren Behälterdeckel (3) auf. Der Behälterboden (2) ist mit einem verschliessbaren Produktdurchlass (5) versehen. Im Behälterinnern ist ein bewegbarer Kolben (4) angeordnet, der den Behälterquerschnitt ungefähr ausfüllt und von der Behälterwand (1) geführt ist. Der Antrieb des Kolbens (4) erfolgt zusätzlich zur Schwerkraft mittels Gas, das durch ein im Behälterdeckel (3) vorhandenes Begasungsventil (6) zwischen den Behälterdeckel (3) und den Kolben (4) einfüllbar ist.

## Beschreibung

Die vorliegende Erfindung bezieht sich auf einen Transport- und Austragbehälter für hochviskose und pastöse Produkte, wie er im Oberbegriff des unabhängigen Patentanspruchs 1 definiert ist.

Hochviskose und pastöse Produkte, wie z.B. Marzipan, sind kaum fliessfähig und müssen daher aus einem Transportbehälter, in dem sie transportiert werden, aktiv herausgefördert werden.

Dies kann beispielsweise mittels eines Schneckenförderers geschehen, der teilweise in einen Behälter der eingangs erwähnten Art eingeführt und von aussen angetrieben wird. Der Nachteil ist, dass hierzu ein Schneckenförderer benötigt wird, also eine relativ aufwendige und teure Vorrichtung, die nicht jedermann zur Verfügung hat.

Es sind auch zylinderförmige Dosiervorrichtungen für hochviskose und pastöse Produkte bekannt, bei denen das auszutragende Produkt in den Zylinder eingefüllt und dann ein Kolben von oben gegen das Produkt gepresst wird, so dass dieses durch einen unten im Boden angeordneten Produktdurchlass aus dem Zylinder hinausgedrückt wird. Dabei wird der Kolben mit Hilfe einer angetriebenen Kolbenstange bewegt. Derartige Dosiervorrichtungen dienen aber nicht gleichzeitig dem Transport von hochviskosen oder pastösen Produkten und weisen keinen druckdicht geschlossenen Behälter auf.

Angesichts der Nachteile der bisher bekannten, oben beschriebenen Vorrichtungen liegt der Erfindung die folgende Aufgabe zugrunde. Zu schaffen ist ein Transport- und Austragbehälter der eingangs erwähnten Art, mit dem hochviskose oder pastöse Produkte abgeschlossen von der Aussenatmosphäre transportiert und ohne aufwendige Einrichtungen ausserhalb des Behälters ausgetragen werden können, ohne den Behälter anderswo als beim Produktdurchlass zu öffnen.

Diese Aufgabe wird durch den erfindungsgemässen Transport- und Austragbehälter gelöst, wie er im unabhängigen Patentanspruch 1 definiert ist. Bevorzugte Ausführungsvarianten ergeben sich aus den abhängigen Patentansprüchen. Im unabhängigen Patentanspruch 9 ist ein vorteilhaftes Verfahren zum Befüllen eines erfindungsgemässen Transport- und Austragbehälters definiert.

Das Wesen der Erfindung besteht darin, dass im Innern eines Transport- und Austragbehälters für hochviskose und pastöse Produkte, mit einer zylinderförmigen Behälterwand, ein bewegbarer Kolben angeordnet ist, der den Behälterquerschnitt ungefähr ausfüllt und von der Behälterwand geführt ist und der Antrieb des Kolbens so vorgesehen ist, dass der Behälter während des Transports ganz und während des Austragens bis auf den Produktdurchlass gasdicht abgeschlossen ist. Der Transport- und Austragbehälter umfasst ausserdem einen Behälterboden, in dem ein verschliessbarer Produktdurchlass angeordnet ist, und einen abnehmbaren Behälterdeckel.

Der erfindungsgemässe Transport- und Austragbehälter ermöglicht den Transport eines hochviskosen oder pastösen Produkts zwischen dem Kolben und dem Behälterboden und das Austragen des Produkts aus dem Behälter, ohne dass zuvor der Behälterdeckel abgenommen werden muss.

Bei einer ersten Ausführungsvariante ist der Kolben so schwer ausgebildet oder beschwert, dass er nach Öffnen des Produkt-durchlasses allein aufgrund der Schwerkraft das hochviskose oder pastöse Produkt durch den Produktdurchlass aus dem Behälter hinausdrückt.

Bei einer zweiten Ausführungsvariante ist im Behälterdeckel ein Gas- oder Flüssigkeitseinlass, insbesondere ein Begasungsventil oder ein Einwegventil für Flüssigkeiten, vorhanden, durch den hindurch zum Druckaufbau ein Gas oder eine Flüssigkeit zwischen den Behälterdeckel und den Kolben einfüllbar ist. Der Kolben wird hier durch den Gas- oder Flüssigkeitsdruck bewegt.

Bei einer dritten Ausführungsvariante ist zusätzlich zur zweiten Ausführungsvariante zwischen Behälterdeckel und Kolben ein volumenveränderbarer Sack angeordnet, der durch den Gas- oder Flüssigkeitseinlass hindurch mit einem Gas oder einer Flüssigkeit befüllbar ist und der gegenüber diesem Gas oder dieser Flüssigkeit dicht ist. Auf diese Weise wird verhindert, dass das Gas oder die Flüssigkeit mit dem Kolben, der Behälterwandung oder dem hochviskosen oder pastösen Produkt in Berührung kommt.

Im folgenden wird der erfindungsgemässe Transport- und Austragbehälter unter Bezugnahme auf die beigefügten Zeichnungen und anhand von drei Ausführungsbeispielen detaillierter beschrieben. Es zeigen:

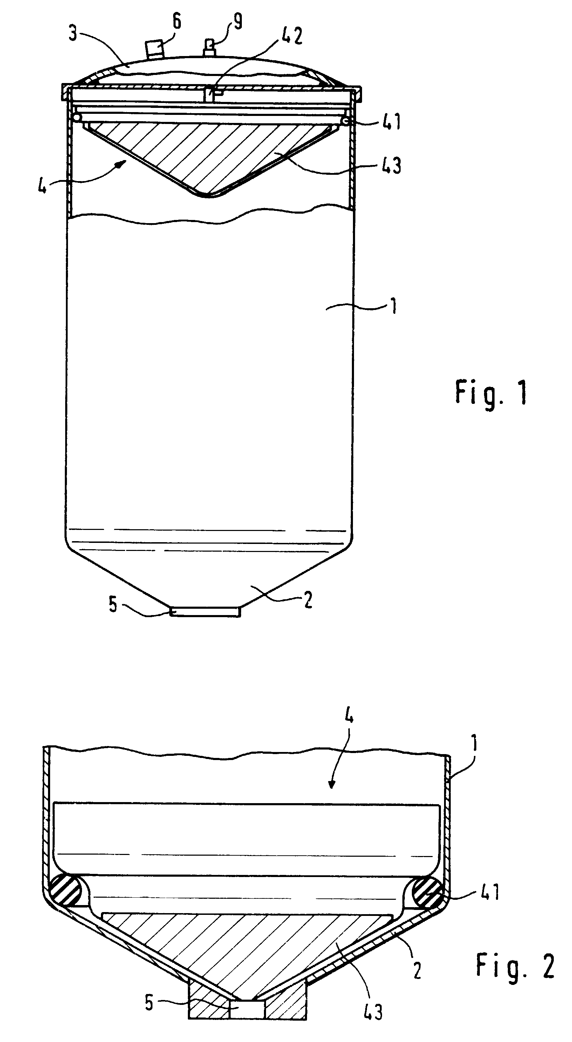

- Fig. 1 -: eine Schnittansicht eines ersten Ausführungsbeispiels eines erfindungsgemässen Transport- und Austragbehälters mit Begasungsventil;
- Fig. 2 -: eine vergrösserte Schnittansicht eines Teils des Transport- und Austragbehälters von Fig. 1 mit einem sich fast zuunterst im Behälter befindenden Kolben;

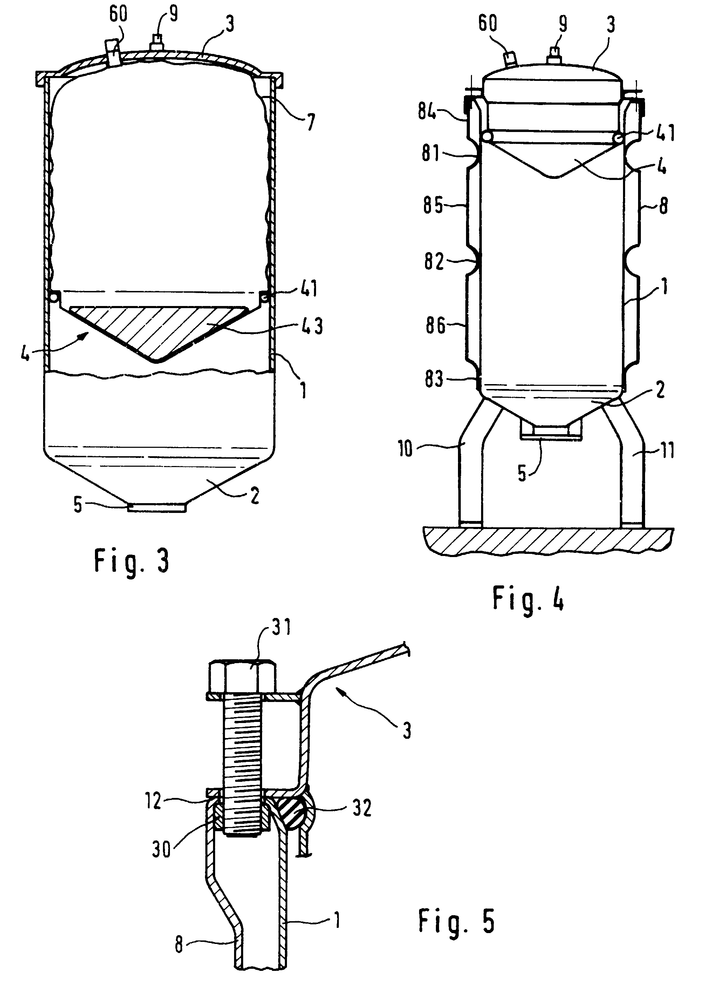

- Fig. 3 -: eine Schnittansicht eines zweiten Ausführungsbeispiels eines erfindungsgemässen Transport- und Austragbehälters mit Einwegventil für Flüssigkeiten und volumenveränderbarem Sack;
- Fig. 4 -: eine Schnittansicht eines dritten Ausführungsbeispiels eines erfindungsgemässen Transport- und Austragbehälters mit Schutzmantel und
- Fig. 5 -: eine vergrösserte Schnittansicht der Befestigung des Behälterdeckels des Transport- und Austragbehälters von Fig. 4.

### Figur 1

Der dargestellte Transport- und Austragbehälter für hochviskose und pastöse Produkte weist eine zylinderförmige Behälterwand 1 auf, die mit einem Behälterboden 2 einteilig ausgebildet ist. Im Behälterboden 2 ist ein Produktdurchlass 5 angeordnet, der beispielsweise mit einem Schieber oder einem Scheibenventil verschliessbar ist. Ein abnehmbarer Behälterdeckel ist mit einem Begasungsventil 6 und einem Sicherheitsventil 9 versehen. Im Behälterinnern ist ein Kolben 4, der die Form eines zum Behälterdeckel 3 hin offenen Gefässes hat und beispielsweise aus Blech besteht, bewegbar angeordnet. Der Kolben 4 füllt den Behälterquerschnitt ungefähr aus und ist von der Behälterwand 1 geführt. Er weist ausserdem einen Traggriff 42 zum Herausnehmen des Kolbens 4 aus dem Behälter auf und ist mit einem Gewicht 43 versehen. Zwischen Kolben 4 und Behälterwand 1 ist am Kolben 4 ein Dichtring 41 angeordnet, der für eine weitgehende Abdichtung sorgt.

Das Befüllen des Transport- und Austragbehälters mit einem hochviskosen oder pastösen Produkt kann folgendermassen erfolgen:
a) Abnehmen des Behälterdeckels 3;
b) Herausnehmen des Kolbens 4;
c) Einfüllen des hochviskosen oder pastösen Produkts;
d) Pressen des hochviskosen oder pastösen Produkts mittels eines Stempels, dessen Unterseite im wesentlichen die gleiche Form hat wie die Unterseite des Kolbens 4, bis dass das hochviskose oder pastöse Produkt entsprechend geformt ist;
e) Wiedereinsetzen des Kolbens 4;
f) Verschliessen des Behälters mit dem Behälterdeckel 3 und
g) - wenn erforderlich - Überlagern mit Schutzgas.

Das Formen des hochviskosen oder pastösen Produkts in Schritt d) wird mit einem Stempel vollzogen, damit die vorhandene Luft beim Pressen seitlich entweichen kann. Ein Pressformen direkt mit dem Kolben 4 ist möglich, aber schwieriger, da der Kolben 4 fast dicht an der Behälterwand 1 anliegt.

Alternativ ist auch ein Befüllen des Transport- und Austragbehälters durch den Produktdurchlass 5 hindurch denkbar.

Beim Transport befindet sich das hochviskose oder pastöse Produkt zwischen Kolben 4 und Behälterboden 2, eventuell mit einem Schutzgas wie beispielsweise CO₂ oder N₂ überlagert. Das Sicherheitsventil 9 ermöglicht bei unzulässigem Überdruck ein Entweichen von Gas.

Zum Austragen des hochviskosen oder pastösen Produkts wird der Produktdurchlass 5 geöffnet und dann durch das Begasungsventil 6 hindurch ein Gas, beispielsweise CO₂ oder N_{2,} zwischen den Behälterdeckel 3 und den Kolben 4 eingefüllt. Durch den Gasdruck wird der Kolben 4 nach unten bewegt und dadurch das Produkt durch den Produktdurchlass 5 aus dem Behälter hinausgedrückt. Eine Dosierung des Produktaustrags kann durch Steuern der Gaszufuhr erfolgen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, oder umgekehrt, so wird auf deren Erwähnung in vorangehenden Figurenbeschreibungen Bezug genommen.

### Figur 2

Es ist hier deutlich ersichtlich, dass die dem Kolben 4 zugewandte Seite des Behälterbodens 2 und die Unterseite des Kolbens 4 im wesentlichen die gleiche Form haben, nämlich im wesentlichen die Form eines Konus. Durch diese Konusform wird ein optimales, d.h. praktisch vollständiges Austragen des hochviskosen oder pastösen Produkts erreicht.

Um möglichst viel hochviskoses oder pastöses Produkt in den Transport- und Austragbehälter füllen zu können, ist der Kolben 4 relativ flach ausgebildet. Die sich daraus ergebende schlechte Führung des Kolbens 4 durch die Behälterwand 1 wird durch Beschweren des Kolbens 4 in seinem konusförmigen Teil mit einem Gewicht 43, was zu einer Stabilisierung führt, wieder ausgeglichen. Die Stabilisierung erlaubt es auch, einen Kolben 4 zu verwenden, dessen Aussenumfang nicht genau dem Innenumfang der Behälterwand 1 entspricht.

Der Dichtring 41 sorgt für eine grobe Abdichtung des Spalts zwischen Kolben 4 und Behälterwand 1. Beim Nach-unten-Bewegen des Kolbens 4 bleibt an der Behälterwand 1 ein dünner Film des hochviskosen oder pastösen Produkts bestehen und bewirkt eine vollständige Abdichtung.

### Figur 3

Beim dargestellten Ausführungsbeispiel ist zwischen Kolben 4 und Behälterdeckel 3 ein volumenveränderbarer Sack 7 angeordnet, der beispielsweise aus einer elastischen Membran oder aus einer unelastischen, flexiblen Folie besteht. Der Behälterdeckel 3 weist anstelle eines Begasungsventils 6 ein Einwegventil 60 für Flüssigkeiten auf, an das der volumenveränderbare Sack 7 angeschlossen ist.

Zum Austragen des hochviskosen oder pastösen Produkts wird der Produktdurchlass 5 geöffnet und dann durch das Einwegventil 60 hindurch eine Flüssigkeit, beispielsweise Wasser, in den volumenveränderbaren Sack 7 eingefüllt, wodurch der Kolben 4 nach unten gedrückt wird.

### Figur 4

Bei diesem dritten Ausführungsbeispiel wird durch das Einwegventil 60 Flüssigkeit direkt in den Raum zwischen Kolben 4 und Behälterdeckel 3 eingefüllt.

Um zu vermeiden, dass die Behälterwand 1 z.B. beim Transport verbeult wird und dann der Kolben 4 eventuell nicht mehr richtig bewegt werden kann, ist um die Behälterwand 1 herum ein Schutzmantel 8 angeordnet. Der Schutzmantel 8 ist im vorliegenden Fall die Fortsetzung der im Bereich der Befestigung des Behälterdeckels 3 umgebogenen Behälterwand 1 und wie diese aus Blech. Einbuchtungen 81, 82, 83 sorgen für einen Abstand zwischen den Mantelflächen 84, 85, 86 des Schutzmantels 8 und der Behälterwand 1.

Der dargestellte Transport- und Austragbehälter weist vier Standfüsse auf, wobei hier nur zwei Standfüsse 10 und 11 sichtbar sind.

### Figur 5

Damit nach Entfernung des Behälterdeckels 3 der gesamte Behälterinnenquerschnitt frei ist und so der Kolben 4 mühelos entnommen werden kann, befinden sich die Ansätze für die Deckelbefestigung, beispielsweise sechs, ausserhalb der Behälterwand 1. Sie bestehen im vorliegenden Fall aus einem Verstärkungselement 30 mit Gewindebohrung, das an dem Verbindungsteil 12 zwischen Behälterwand 1 und Schutzmantel 8 befestigt ist. Der Behälterdeckel 3 wird mit einer Schraube 31 pro Ansatz befestigt. Ein Dichtring 32 sorgt für die Dichtheit der Verbindung.

Zu den vorbeschriebenen Transport- und Austragbehältern sind weitere konstruktive Variationen realisierbar. Hier ausdrücklich erwähnt seien noch:
- Die Transport- und Austragbehälter können neben Standfüssen, wie beim dritten Ausführungsbeispiel, auch Stapelringe aufweisen.
- Der Schutzmantel 8 kann mit der Behälterwand 1 verschweisst sein.
- Der Behälter kann zum Schutz auch in einem kubischen oder quaderförmigen, mit Ecksäulen versehenen Schutzgestell angeordnet sein.

## Patentansprüche

1. Transport- und Austragbehälter für hochviskose und pastöse Produkte, mit einer zylinderförmigen Behälterwand (1), einem Behälterboden (2), in dem ein verschliessbarer Produktdurchlass (5) angeordnet ist, und einem abnehmbaren Behälterdeckel (3), dadurch gekennzeichnet, dass im Behälterinnern ein bewegbarer Kolben (4) angeordnet ist, der den Behälterquerschnitt ungefähr ausfüllt und von der Behälterwand (1) geführt ist, wobei der Antrieb des Kolbens (4) so vorgesehen ist, dass der Behälter während des Transports ganz und während des Austragens bis auf den Produktdurchlass (5) gasdicht abgeschlossen ist.

2. Transport- und Austragbehälter nach Anspruch 1, dadurch gekennzeichnet, dass der Kolben (4) so schwer ausgebildet oder beschwert ist, dass er bei offenem Produktdurchlass (5) allein aufgrund der Schwerkraft allfällig zwischen ihm und dem Behälterboden (2) vorhandenes hochviskoses oder pastöses Produkt durch den Produktdurchlass (5) aus dem Behälter hinausdrückt.

3. Transport- und Austragbehälter nach Anspruch 1, dadurch gekennzeichnet, dass im Behälterdeckel (3) ein Gas- oder Flüssigkeitseinlass, insbesondere ein Begasungsventil (6) oder ein Einwegventil (60) für Flüssigkeiten, vorhanden ist, durch den hindurch zum Druckaufbau ein Gas oder eine Flüssigkeit zwischen den Behälterdeckel (3) und den Kolben (4) einfüllbar ist.

4. Transport- und Austragbehälter nach Anspruch 3, dadurch gekennzeichnet, dass zwischen Behälterdeckel (3) und Kolben (4) ein volumenveränderbarer Sack (7) angeordnet ist, der durch den Gas- oder Flüssigkeitseinlass hindurch mit einem Gas oder einer Flüssigkeit befüllbar ist und der gegenüber diesem Gas oder dieser Flüssigkeit dicht ist.

5. Transport- und Austragbehälter nach einem der Ansprüche 1 bis 4, dadurch gekennzeichnet, dass die dem Kolben (4) zugewandte Seite des Behälterbodens (2) und die Unterseite des Kolbens (4) im wesentlichen die gleiche Form haben, insbesondere im wesentlichen die Form eines Konus.

6. Transport- und Austragbehälter nach einem der Ansprüche 1 bis 5, dadurch gekennzeichnet, dass der Kolben (4) zur Stabilisierung der Führung mit einem Gewicht (43) so beschwert ist, dass sich der Schwerpunkt des Kolbens (4) inklusive Gewicht (43) unterhalb des untersten Berührungspunkts von Kolben (4) und Behälterwand (1) befindet.

7. Transport- und Austragbehälter nach einem der Ansprüche 1 bis 6, dadurch gekennzeichnet, dass am Kolben (4) zwischen Kolben (4) und Behälterwand (1) ein Dichtring (41) angeordnet ist, der zusammen mit einem bei der Austragung von im Behälter vorhandenem hochviskosem oder pastösem Produkt an der Behälterwand zurückbleibendem Produktfilm für eine Abdichtung sorgt.

8. Transport- und Austragbehälter nach einem der Ansprüche 1 bis 7, dadurch gekennzeichnet, dass um die Behälterwand (1) herum ein Schutzmantel (8) zum Schutz vor Verbeulung angeordnet ist.

9. Verfahren zum Befüllen eines Transport- und Austragbehälters nach einem der Ansprüche 1 bis 8 mit einem hochviskosen oder pastösen Produkt, gekennzeichnet durch die folgenden Schritte:
a) Abnehmen des Behälterdeckels (3);
b) Herausnehmen des Kolbens (4);
c) Einfüllen des hochviskosen oder pastösen Produkts;
d) Pressen des hochviskosen oder pastösen Produkts mittels eines Stempels, dessen Unterseite im wesentlichen die gleiche Form hat wie die Unterseite des Kolbens (4), bis dass das hochviskose oder pastöse Produkt entsprechend geformt ist;
e) Wiedereinsetzen des Kolbens (4);
f) Verschliessen des Behälters mit dem Behälterdeckel (3) und
g) - wenn erforderlich - Überlagern mit Schutzgas.
